# EUROPEAN PATENT APPLICATION

(11) **EP 1 389 739 A1**
(43) Date of publication of application: **18.02.2004**
(21) Application number: 02292036.7
(22) Date of filing: 13.08.2002
(51) Int. Cl.: G02F 1/095

(54) **Optical circulator using planar lightwave circuits**

(71) Applicant: Alcatel Optronics France, 75008 Paris (FR)
(72) Inventor: Wessel, Rudolf, 70372 Stuggart (DE); Grard, Emmanuel, 91240 Saint Michel Sur Orge (FR); Hamoir, Dominique, 91620 Nozay (FR)
(74) Representative: Cabinet Hirsch

(57) **Abstract**

A four-port optical circulator has two planar lightwave circuit polarisation beam splitters (40, 54). Two ports of the circulator are formed by two input ports (32, 36) of the first splitter (40). The two other ports of the circulator are formed by two input ports (34, 38) of the second splitter (56). The circulator further has an assembly of a wave plate (46) and a Faraday rotator (48). A first light path through this assembly connects a first output port (42) of the first splitter (40) and a first output port (50) of the second splitter (54). A second light path through the assembly connects a second output port (44) of the first splitter (40) and a second output port (52) of the second splitter (54).

The circulator is easy to integrate into a planar lightwave circuit. It may also be used as isolator.

## Description

The present invention relates to optical telecommunications, and more specifically to polarisation beam splitters.

M. Okuno et al. , Birefringence Control of Silica Waveguides on Si and Its Application to a Polarization-Beam Splitter/Switch, Journal of Lightwave Technology, vol. 12, no. 4, pp. 625-633 discloses a polarisation beam splitter, built using integrated Mach-Zehnder interferometer and stress applying amorphous silicon layers. One drawback of this splitter is the additional manufacturing step for forming the α-Si layer.

Y. Hashizume et al, Integrated polarisation beam splitter using waveguide birefringence dependence on waveguide core width, Electronics Letters vol. 37, no. 25, Dec. 2001, pp. 1517-1518, discloses a polarisation beam splitter, built using integrated Mach-Zehnder interferometer with one branch having an increased width.

One could also contemplate a bulk optics isolator, including two collimating lenses, two polarisation splitters, a Faraday rotator and a wave-plate. Rigorous alignment of these components would then be necessary for ensuring proper operation. Collimating lenses should notably be placed with a high precision. This would make it difficult to insert the isolator within a complex planar-based optical component.

Accordingly, there remains a need for an isolator or circulator, which is easy to manufacture and which may be inserted in a planar lightwave circuit.

The invention therefore provides an optical component, comprising
- a first planar lightwave circuit polarisation beam splitter, two input ports of which are ports of the circulator,
- a second planar lightwave circuit polarisation beam splitter, two input ports of which are ports of the circulator,
- an assembly of a wave plate and a Faraday rotator, the assembly being connected between a first output port of the first splitter and a first output port of the second splitter and being connected between a second output port of the first splitter and a second output port of the second splitter.

One or both polarisation beam splitter may comprise a Mach-Zehnder interferometer, having at least one branch with an increased width section; one may also provide at least one branch with a reduced width section. The Mach-Zehnder interferometer(s) may further comprise a heater adapted to heat at least one branch of the interferometer. A cooler is another possible option. One may also provide that the maximum isolation wavelength of the component is tuneable.

In one example, the wave plate is a quarter wavelength wave plate.

The assembly may be connected to the splitter via at least one segmented waveguide or via at least one tapered waveguide.

In another example, the Faraday rotator comprises at least two sections separated by waveguides. One may also provide that the wave plate and Faraday rotator are separated by waveguides.

The Faraday rotator may comprise a magnet on top of the planar lightwave circuit, an inverted U-shaped magnet sitting on top of the rotator or a C-shaped magnet sandwiching the edge of the planar lightwave circuit.

A circulator embodying the invention will now be described, by way of nonlimiting example, and in reference to the accompanying drawings, where :
- figure 1 is a schematic view of a polarisation beam splitter that may be used in a circulator according to the invention;
- figure 2 is a schematic view of another polarisation beam splitter;
- figure 3 is a schematic view of a four-port circulator according to the invention;
- figure 4 is a schematic view of another embodiment of the circulator.

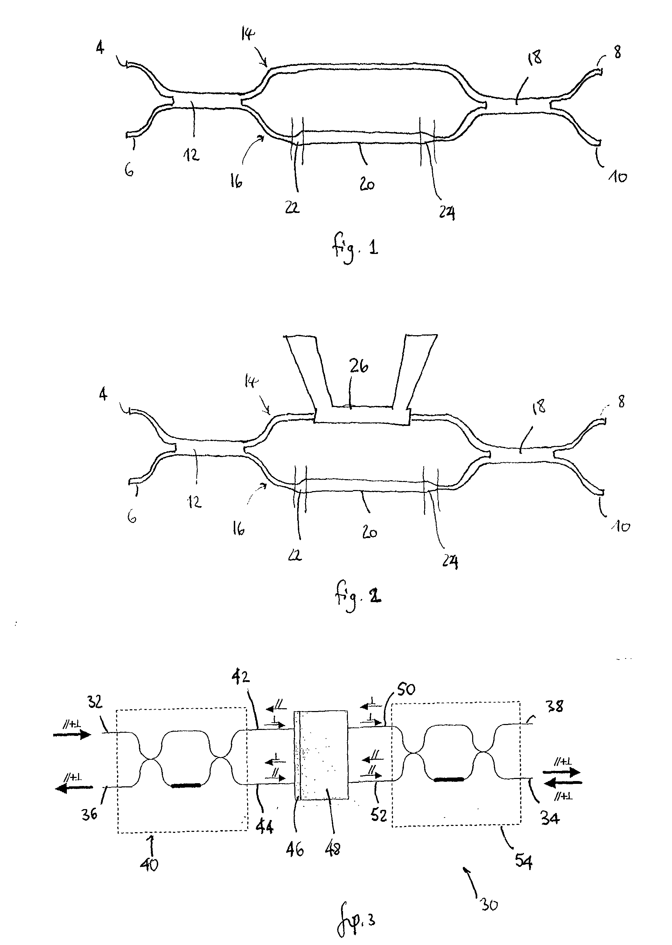

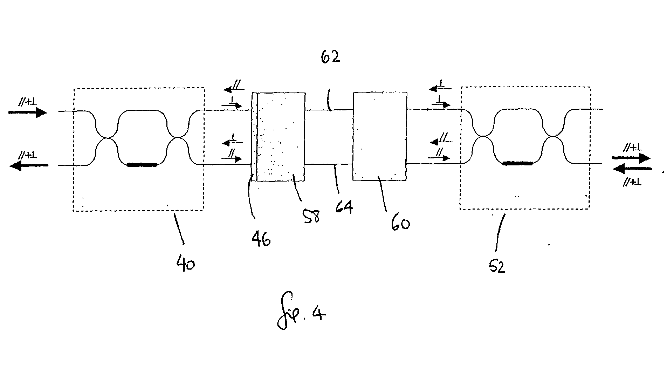

The invention is directed to a circulator embodied in a planar lightwave circuit (PLC). It preferably uses PLC polarisation beam splitters, which are discussed in reference to figures 1 and 2. The circulator itself is disclosed in reference to figures 3 and 4. In the rest of this description, the invention is described as a circulator. However, according to the embodiments, the optical circuit embodying the invention may be used as a circulator, as an isolator, or simply as a switchable polarisation beam splitter. More specifically, the circuit may be used as a switchable cyclic circulator, as a combined 2x2 switch or isolator.

Planar lightwave circuits made of Silica on Silicon show a small birefringence. This is advantageous in that it permits manufacturing of polarisation independent integrated optical components. However, the small birefringence of the silica glass waveguide layers is a drawback for manufacturing integrated polarisation splitters - since polarisation splitters clearly require the ability to separate light according to its polarisation. In the rest of this description, parallel polarisation is used for referencing light having a polarisation parallel to the substrate of the planar lightwave component: perpendicular polarisation is used for referencing light having a polarisation perpendicular to the substrate of the planar lightwave component.

The polarisation beam splitter of figures 1 and 2 take advantage of the fact that birefringence depends on the width of a waveguide for manufacturing a polarisation beam splitter. The width of the waveguide forming one of the branches of a Mach-Zehnder interferometer is adapted, so as to obtain the necessary relative phase shift between the two branches of the interferometer, for each polarisation component of the light. Figure 1 is a schematic view of a polarisation beam splitter 2, which may be used in a circulator according to the invention. The splitter has four ports 4, 6, 8 and 10. Although the device is symmetric, the words "input ports" and "output ports" are used in the rest of this description for the sake of convenience: Light received on one of the input ports is split and provided on the output ports; similarly, light received on one of the output ports is split and provided on one of the input ports. The device is described for light injected on the left side of the figures, unless otherwise specified.

The splitter of figure 1 comprises a first coupler 12. Coupler 12 is a 3 dB coupler, which couples light coming from input ports 4 and 6. Coupler 12 may be manufactured using any of the techniques known per se in the art of planar lightwave components; it may for instance be a multi-mode interference (MMI) coupler.

Coupler 12 feeds symmetrically light received on input ports 4 and 6 into the two arms 14 and 16 of a Mach-Zehnder interferometer. Thus, a first end of the arms 14 and 16 is connected to the first coupler 12.

The other ends of the arms 14 and 16 of the Mach-Zehnder interferometer are connected to a second coupler 18. Coupler 18 is another 3 dB coupler, which may like first coupler 12 be a MMI coupler. Light received by the coupler from both arms of the Mach-Zehnder interferometer is symmetrically provided to output ports 8 and 10.
As explained above, the relative phase shift between the two arms 14, 16 of the Mach-Zehnder interferometer is obtained by varying the width of the waveguide forming at least one of both arms. In the example of figure 1, the second arm 16 of the Mach-Zehnder interferometer has a section 20 with an increased width. Due to this increased width, the birefringence of the second arm 16 varies. Indeed, the material parameters (especially the thermal expansion coefficient) and the fabrication parameters lead to a polarisation dependent refractive index distribution. The index distributions and the mode field depend on the waveguide width. For realising polarisation independent waveguides in SiO₂/Si, one may balance the stress for TE and TM polarisation by using a higher doped cladding material. This balancing is related to square waveguides. If the waveguide width is changed the balancing is no longer right and birefringence occurs. Calculations showed that the birefringence increases linearly with the waveguide width.

Thus, the width of the waveguide forming one of the branches of a Mach-Zehnder interferometer may be adapted, so as to obtain a relative phase shift between the two branches of the interferometer, which varies according to the polarisation of the light. The example discussed above is one of an increased width section; one could also use a reduced width section, or use at the same time an increased width section in one arm and a reduced width section in the other arm.

On both sides of section 20 with an increased width, there are provided tapers 22, 24. Each taper connects the waveguide of the second arm 16 with the increased width section 20. Due to its width, section 20 may no longer be single mode. Tapers 22, 24 provide an adiabatic transition from the single mode waveguide to the increased width section 20; they avoid exciting higher order modes in the increased width section 20.

The operation of the polarisation beam splitter of figure 1 is now explained, in the case of a continuous wave light. The light is assumed to enter the polarisation beam splitter of figure 1 through port 4. It is fed symmetrically to both branches 14, 16 of the Mach-Zehnder interferometer, with a relative π/2 phase shift of one branch with respect to the other one.

The parallel polarisation component of the light travelling through the second branch 16 of the Mach-Zehnder interferometer L_{P2} undergoes zero phase shift, relative to the parallel polarisation component L_{P1} of the light travelling through the first branch 14. In the second coupler 18, lights L_{P1} and L_{P2} interfere destructively on port 8 and constructively on port 10, due to the additional π/2 phase shift caused by the second coupler 18.

Similarly, the orthogonal polarisation component of the light travelling through the second branch 16 of the Mach-Zehnder interferometer L_{T2} undergoes a phase shift π, relative to the orthogonal polarisation component L_{T1} of the light travelling through the first branch 14. In the second coupler 18, lights L_{T1} and L_{T2} interfere constructively on port 8 and destructively on port 10.

Thus, the polarisation beam splitter 2 provides :
- on port 8 the orthogonal polarisation component of the input light and
- on port 10 the parallel polarisation component of the input light.

An example of possible dimensions of the planar lightwave component of figure 1 is now given, in the example of a C-band splitter; the splitter is manufactured in a silica on silicon process, with following silica glass layer thickness: buffer layer 15 µm, core layer: 5.2 µm, cladding layer: 15 µm. The dimensions of the arms of the Mach-Zehnder interferometer are the following :
- width of first arm 14:5.2 µm
- length of region 20 : 8 mm
- width of region 20: 11.2 µm
- length of taper 22 (or 24) : 1.15 mm
The first arm 14 and second arm 16 have similar lengths. With such dimensions, the birefringence in the first arm is unchanged (close to zero), while the birefringence in the second arm is increased to get a total phase difference of π between both polarisations at a wavelength of 1550 nm. For the design it is advantageous to take the birefringence of the taper into account.

The operation of the polarisation beam splitter is clearly symmetric. Thus, the splitter may be used for splitting the light received on port 6; it then provides the parallel polarisation component of this light on port 8 and the orthogonal polarisation component of this light on port 10. The operation of the splitter for light received on ports 8 and 10 is similar.

Figure 2 is a schematic view of another embodiment of a polarisation beam splitter according to the invention. In the example of figure 2, one branch of the Mach-Zehnder interferometer is provided with a thermo-optic phase shifter. This makes it possible to change the relative phase shift between the two branches of the interferometer. This permits fine-tuning of the relative phase shift, for instance according to the wavelength of the light travelling through the polarisation splitter.

The splitter of figure 2 is similar to the one of figure 1. It further comprises a thin-film resistor 26, deposited on at least a part of the first arm 14 of the Mach-Zehnder interferometer. This thin film resistor is but one of the example of the possible means for heating one branch of the Mach-Zehnder interferometer. One could use an outside resistor, locally contacting one of the branches of the interferometer.

Silica has a positive thermo-optic coefficient, so that its refractive index increases when it is heated by the resistor 26. Assuming the waveguide of the first branch is formed of silica, the index of the waveguide is increased, which increases the phase shift in this branch

The heater may first be used for optimising the splitting. The "fine tuning" is helpful to get the right phases or working point for the polarisation beam splitter.

In addition, the heater may be used for thermoregulating the splitter. This may not be necessary. Ideally the phase shift of the two waveguide arms is very small: 0 for one polarisation π for the other polarisation. The temperature dependence of the total device is therefore very small. This might be different if one decides to use an asymmetric Mach-Zehnder with some picoseconds time delay..

The thin film heater can be used for a polarisation beam splitter switch. As the phase difference of the two arms can be changed. It is possible to launch the perpendicular polarisation to the upper arm 12 or to the lower arm 44 - vice versa for the parallel polarisation. This has been demonstrated by NTT in the above-mentioned reference Okuno et al.. The thermooptical phase shifter induces also a small birefringence. However, this can be suppressed if trenches are etched besides both waveguides. In the example of figure 2, the heater is a thin-film resistor of a width of 50 µm. With a heating power of typically 0.5 W; a phase shift of π is obtained. The heater could also be a local heater, contacting the PLC or not. The heater could be replaced by a cooler, or by a cooler / heater such as a Peltier element.

The splitter discussed above was shown to have an extinction ratio of more than 20 dB. It operates in the C-band, over a range of more than 40 nm. Especially when the relative time delay/phase shift of the two Mach-Zehnder branches is matched - apart form the π phase shift for one polarisation - a very broadband device covering C- and L-Band is obtained.

In the example of figure 2, the resistor is deposited on the first branch of the Mach-Zehnder interferometer. If a second heater is used it is possible to tune the Interferometer in the other direction so the tuning range is doubled.

In the example of figures 1 and 2, the phase shift between the branches of the Mach-Zehnder interferometer is caused by an increased width in one of the branches. The width of the other branch is unchanged and corresponds to the width of the waveguide. One could also adapt the width in both branches, e.g. by reducing the width of one branch and increasing the width of the other one.

The presence of the heater has the further advantage of improving the symmetry of the splitter. It makes it possible to tune the wavelength where the maximum isolation is obtained. This makes it possible to adapt the splitter to the wavelength band where it is being used.

The polarisation beam splitter of figures 1 and 2 may be manufactured with standard manufacturing steps. Contrary to the prior art solution using α-Si layers, the splitter may be manufactured at the same time as the rest of the planar lightwave circuit, without having to provide additional specific manufacturing steps.

Figure 3 is a schematic view of a four-port circulator according to the invention. This circulator uses the polarisation beam splitter of figure 1 or 2. The circulator 30 of figure 3 has four ports 32, 34, 36 and 38. The circulator comprises a first PBS 40, with two ports connected to the first and third ports 32 and 36 of the circulator. The two other ports 42, 44 of the first splitter 30 are connected to a λ/4 wave plate 46, which itself is connected to a Faraday rotator 48. The light received by the wave plate 46 from the two respective ports 42, 44 of the first splitter is output by the Faraday rotator 48 towards two ports 50, 52 of a second splitter 54. The two other ports of the second splitter are connected to the fourth and second ports 38 and 34 of the circulator.

The assembly of the wave plate and Faraday rotator is asymmetric. The principal states of polarisation - parallel and orthogonal - are conserved from when light passes from left to right, and are exchanged when light passes from right to left. The term right and left refer to the drawing; the polarisation states are conserved when light enters the assembly through the λ/4 wave plate and are exchanged when light enters the assembly through the Faraday rotator.

The operation of the circulator of figure 3 is the following. Light L₁ entering the circulator through its first port 32 is separated into
- parallel polarised light L_{P1} on the second output port 44 of the first splitter and
- orthogonal polarised light L_{T1} on the first output port 42 of the first splitter.
   Lights Lₚ₁ and L_{T1} pass through the wave plate 46 and Faraday rotator 48; as discussed above, this does not change their polarisation state.
   Lights Lₚ₁ and L_{T1} then enter the output ports 50 and 52 of the second splitter 54. They interefere constructively on the second port 34 of the circulator, and destructively on the fourth port 38 of the circulator. Thus, light entering the circulator on the first port 32 is output on the second port 34.
   Similarly, light entering the circulator on the third port 36 is output on the fourth port 38.
   In the other direction of propagation of light, light L₂ entering the circulator on the second port 34 is separated into
- parallel polarised light L_{P2} on the second output port 52 of the second splitter and
- orthogonal polarised light L_{T2} on the first output port 50 of the second splitter.

Lights L_{P2} and L_{T2} pass through the Faraday rotator 48 and wave plate 46; as discussed above, due to the fact that the rotator is asymmetrical, the orthogonal and parallel states of polarisation are exchanged. Thus, light entering the first output port 42 of the first splitter 40 is polarised parallel to the substrate, while light entering the second output port 44 of the second splitter 40 is polarised orthogonal to the substrate. As a consequence, these lights undergo destructive interference toward the first port 32 of the circulator and constructive interference toward the third port of the circulator.

Thus, light entering the circulator on the second port 34 is output on the third port 36. Similarly, light entering the circulator on the fourth port 38 is output on the first port 32.

The device of figure 3 therefore behaves as a cyclic four-port circulator. It may of course be used as an isolator, e. g. when connected between its first and second ports.

As compared to the prior art device, the splitter does not use bulk polarisation splitters, but planar splitters. This is *per se* an important cost reduction; in addition, due to the use of planar splitters, there is no need to provide collimating lenses, which also makes the circulator less costly.

The assembly of the circulator is also simplified : the splitters may simply be integrated in the PLC. The wave plate and Faraday rotator are mounted into slots etched or diced in the PLC; the waveguides are segmented or tapered to the waveplate or rotator; in any case, there is no need for collimating lenses and optical alignment of the splitters with the wave plate and Faraday rotator.

The PLC polarisation splitters were discussed in reference to figures 1 and 2. One could also use other types of planar polarisation splitters for manufacturing the circulator of figure 3. The wave plate is a commercially available component; one could use a 15 µm thick wave plate sold by e.g. NEL

Faraday rotators are also available commercially. For instance TDK (Japan) sells a 400 µm long Faraday rotator. Shiraishi et al discusses a 290 µm long Faraday rotator, which could also be used in the circulator of figure 3.

Figure 4 is a schematic view of another circulator. The example of figure 4 differs from the example of figure 3 in that the Faraday rotator is split in two sections. Thus, figure 4 shows a two-piece rotator 58, 60. The sections are separated by waveguide 62, 64, one waveguide being provided for each light path through the rotator. The operation of the circulator of figure 4 is identical to the operation of the circulator of figure 3. The advantage of having a rotator split in two is that it helps in controlling mode mismatch, as discussed below.

In both examples, the Faraday rotator uses a magnet (not represented on the figures). The magnet creates a magnetic field, roughly oriented in the direction of the beam and exceeding the saturation field of the rotating material. The field type extends over a zone less than 500 µm x 100µm x 30 µm. Due to the low magnetooptic coefficient of the silica used for the PLC waveguides, the presence of the magnetic field has little if no polarisation rotation effect on the PLC components - notably on the splitters. Thus, a magnet of 1 mm³ size is sufficient for the Faraday rotator. The shape of the magnet is of little relevance. The magnet could for instance be a plate sitting on the top of the PLC or have an inverted-U shape sitting on top of the waveguide forming the Faraday rotator. Both solutions are compatible with having the circulator function anywhere within a complex PLC. If the circulator is close to the edge of the PLC, one may also use a C-shaped magnet sandwiching the edge of the PLC over the waveguide of the rotator. This simplifies assembly of the magnet and increasing the magnetic field within the rotator.

The insertion losses of the circulator of figures 3 and 4 are less than 1 dB, as explained now. Insertion losses to and from the PLC splitters are low, since these are integrated into the PLC. The connection of the PLC waveguides to the wave plate or to the rotator may cause some mode mismatch, due to unguided light path, and thus increase insertion losses. However, this effect may be controlled. First, one may use segmented waveguide. This solution reduces the mean effective index : transition to larger mode radii occurs without making the waveguide multimode and the enlargement is two-dimensional by nature. Second, one may use tapered waveguides for connecting to the wave plate or Faraday rotator. This may cause the waveguide to become locally multimode, but this proves acceptable over short distances, with adiabatic transitions. Third, one may use a Faraday rotator split in two section or more - the example of two sections being shown on figure 4; mode mismatch is controlled by the presence of single mode waveguides - again with tapered sections - between the sections of the Faraday rotator. Fourth, one may reduce the index step of the PLC. This increases minimum bending radii and limits compactness; however, it allows the mode mismatch to be controlled, in that the waveguide may be enlarged to a higher width while remaining single mode. Using one or several of these suggestions makes it possible to control insertion losses.

The table below gives the minimum mode radius expansion for ensuring that the insertion loss of the circulator remains below 1 dB. The external coupling loss is not taken into account, this corresponding to the case where the circulator is integrated into a more complex PLC-based component or subsystem. The table considers the examples of rotators having a length of 400 µm or a length of 290 µm. Losses would be even lower if the length of the rotator was further reduced, with a similar mode radius expansion; alternatively, mode radius expansion could be further reduced if the length of the rotator was further reduced. Losses in the wave plate are an order of magnitude lower, due to the reduced thickness of the wave plate, and their contribution may be disregarded. The table considers two values of the step index for the PLC silica waveguides; the value of 0.015 corresponds to bend radii of 3 mm and a -0.7 dB coupling loss to a G.652 step-index fibre; the value of 0.008 increases the bend radii to 12 mm, with however a -0.2 dB coupling loss.

| | | | | |
|---|---|---|---|---|
| Rotator length (µm) | 400 | | 290 | |
| Rotator layout | Monolithic | split in 2 | monolithic | Split in 2 |
| Mode expansion for Δn of 0.008 | X2.3 | x2 | x2 | x1.7 |
| Mode expansion for Δn of 0.015 | X3.3 | x2.9 | x2.9 | x2.4 |

The table shows that in the worst case of the 400 µm long rotator, insertion losses of 1 dB may be obtained, with a mode expansion of x3.3. This value is still realistic. Otherwise, a mode expansion of no more than x2 with a split rotator also provides losses of less than 1 dB, with a step index of 0.008. The table shows that low insertion losses may be obtained for the circulator.

As a comparison, the insertion loss of a standard bulk isolator coupled to a PLC by fibre pigtails would be 0.9 to 1.1 dB (single stage or double stage), to which the connection losses to the PLC should be added. This shows that insertion losses for the circulator of figures 3 or 4 will be lower or very similar to the insertion losses of prior art bulk circulators or isolators, while offering better price and compactness.

With a splitter having extinction ratio of more than 20 dB, the extinction ratio of the circulator - that is the power ratio of e.g. port 3 or 4 to port 2, for light applied to port 1 - is more than 20 dB. It is also possible to cascade PBSs to increase the extinction ratio to more than 40 dB. For such a configuration on each output arms 8 and 10 of the PBS another PBSs is cascaded working as a TE mode filter and a TM mode filter. The wavelength range over which the circulator operates may be higher than 100 nm. Indeed, the PLC polarisation beam splitter was shown to operate in C or L-bands, over a range of more than 100 nm. Commercially available wave plate and Faraday rotator may also operate over such a range. The circulator thus behaves identically or almost identically over a broad range of wavelength.

The examples described above discuss the use of the component of the invention as a circulator and as an isolator. The component is thus an isolator and circulator in one.

In the example where the polarisation beam splitter is switchable thanks to the thermooptical phase shifters, the circulator or isolator offers switching ability, by reversing the relative phase shift between parallel and orthogonal polarisation components of the light. Thermo-regulation also makes it possible to revert the cycle of the circulator; in the example, the circulator is a 1234 cycle circulator, where light entering port n is output at port n+ 1 (modulo 4). The switching ability of the polarisation beam splitter makes it possible to change the circulator to a 4321 circulator, where light entering port n is output at port n-1 (modulo 4).

Last, thanks again to thermooptic phase shifting, the maximum isolation is tuneable. For instance, the centre wavelength could be tuned for optimal operation in the C-band, or for optimal operation in the L-band, or for optimal operation in both bands. This makes it possible to use the same component for covering C band as well as L band. This reduces diversity.

In the examples of figures 3 and 4, the same wave plate and rotator crystal are used for both light paths. One could also use separate wave plates and rotators for each light path. This may reduce possible interference between the two light paths; however, it would increase the number of components. It appears that the interference between the light paths are reduced, so that it is possible, as in the example of figures 3 and 4, to use a single wave plate and a single rotator crystal.

Although this is not represented on the figures, the wave plate and Faraday rotator would usually be at an angle with respect to the waveguides; one may also coat their facets with anti-reflection coating; this reduces insertion losses and return losses.

In the examples of figures 3 and 4, the wave plate and Faraday rotator are adjacent. They could also be separated by waveguides; this may be advantageous for reducing mode mismatch, just like separating the Faraday rotator into two sections or more may help in reducing mode mismatch.

Last, the Faraday rotator may comprise or not a waveguide. As discussed above, the circulator may be manufactured, with reduced insertion losses, even where the rotator does not have a waveguide. The Faraday rotator may also include a waveguide; this would help in controlling mode mismatch and would further reduce insertion losses.

## Claims

1. An optical component, comprising
- a first planar lightwave circuit polarisation beam splitter (40), two input ports (32, 36) of which are ports of the circulator,
- a second planar lightwave circuit polarisation beam splitter (40), two input ports (38, 34) of which are ports of the circulator,
- an assembly of a wave plate (46) and a Faraday rotator (48), the assembly being connected between a first output port (42) of the first splitter (40) and a first output port (50) of the second splitter (54) and being connected between a second output port (44) of the first splitter (40) and a second output port (52) of the second splitter (54).

2. The component of claim 1, wherein at least one polarisation beam splitter (40, 54) comprises a Mach-Zehnder interferometer, having at least one branch (16) with an increased width section (20).

3. The component of claim 1 or 2, wherein at least one polarisation beam splitter (40, 54) comprises a Mach-Zehnder interferometer, having at least one branch (16) with an reduced width section (20).

4. The component of claim 2 or 3, wherein the Mach-Zehnder interferometer further comprising a heater (26) adapted to heat at least one branch (14) of the interferometer.

5. The component of claim 2, 3 or 4, wherein the Mach-Zehnder interferometer further comprising a cooler adapted to cool at least one branch (14) of the interferometer.

6. The component of one of claims 1 to 5, wherein the maximum isolation wavelength of the component is tuneable.

7. The component of claim one of claims 1 to 6, wherein the wave plate is a quarter wavelength wave plate.

8. The component of one of claims 1 to 7, wherein the assembly is connected to the splitter via at least one segmented waveguide.

9. The component of one of claims 1 to 8, wherein the assembly is connected to the splitter via at least one tapered waveguide.

10. The component of one of claims 1 to 9, wherein the Faraday rotator comprises at least two sections (58, 60) separated by waveguides (62, 64).

11. The component of one of claims 1 to 10, wherein the wave plate and Faraday rotator are separated by waveguides.

12. The component of one of claims 1 to 11, wherein the Faraday rotator comprises a magnet on top of the planar lightwave circuit.

13. The component of one of claims 1 to 11, wherein the Faraday rotator comprises an inverted U-shaped magnet, the magnet sitting on top of the rotator.

14. The component of one of claims 1 to 11, wherein the Faraday rotator comprises a C-shaped magnet sandwiching the edge of the planar lightwave circuit.
